# EUROPEAN PATENT SPECIFICATION

(11) **EP 2 266 745 B1**
(45) Date of publication and mention of the grant of the patent: **13.11.2013**
(21) Application number: 08736720.7
(22) Date of filing: 03.03.2008
(51) Int. Cl.: B23K 20/12

(54) **TOOL FOR THE FRICTION STIR WELDING OF TWO METAL ITEMS WITH AN ANGLED JOINT HAVING A PIN AND A WEDGE-SHAPED SHOULDER**
WERKZEUG ZUM REIBRÜHRSCHWEISSEN VON ZWEI METALLGEGENSTÄNDEN MIT EINER ABGEWINKELTEN VERBINDUNG MIT EINER STIFT- UND EINER KEILFÖRMIGEN SCHULTER
OUTIL PRÉSENTANT UNE TIGE ET UN ÉPAULEMENT EN FORME DE COIN POUR LE SOUDAGE PAR FRICTION-MALAXAGE DE DEUX PIÈCES MÉTALLIQUES AVEC UN CERTAIN ANGLE DE JONCTION

(43) Date of publication of application: 29.12.2010
(73) Proprietor: FUNDACIÓN TECNALIA RESEARCH & INNOVATION, 20009 San Sebastián (Guipúzcoa) (ES)
(72) Inventor: MARTINEZ DÍEZ, Leonardo, E-20009 San Sebastian (ES); PENALVA OSCOZ, Mari, Luz, E-20009 San Sebastian (ES); OTAEGUI MARTÍN, Amaia, E-20009 San Sebastian (ES)
(74) Representative: Carpintero Lopez, Francisco
(86) International application number: PCT/ES2008/000118
(87) International publication number: WO 2009/109667

(56) References cited:
- WO-A-2007/132252
- DE-A1-102005 060 178
- JP-A- 11 320 128
- JP-A- 2001 321 965

## Description

This invention belongs to the field of tools. More specifically, it relates to a tool for the friction stir welding of two metal items which will not form a flat joint, that is to say, whose joint angle is other than 180° (see the preamble of claim 1).

### BACKGROUND OF THE INVENTION

Friction stir welding (FSW) has been invented, patented and developed for its industrial purpose by TWI (The Welding Institute), in Cambridge, United Kingdom. The patent US 5460317 describes said friction stir welding process and constitutes the most descriptive text regarding this new welding technique.

Friction welding is a solid state bonding technique, without addition of material, where the initial characteristics of the material remain. By means of the use of friction welding it is possible to weld different materials of a considerable thickness, obtaining excellent mechanical properties and causing a very slight distortion in the welded items.

The basic concept is a non-consumable rotating tool with a profiled pin or rotor and a shoulder or cylinder with a flat cross-section, specifically designed for this purpose. Said pin is inserted between the adjacent edges of the plates to be welded and it traverses the entirety of the bonding line. There are two types of tools; the first and more basic type is the rigid tool where the pin does not feature a relative movement with regard to the shoulder. On the other hand, there are tools where the pin features a relative movement with regard to the shoulder, this tool being denominated "FSW tool with a retractable pin". The shoulder of the tool rotates solidarily with the pin in the majority of the tools used, although there also exist tools in which the shoulder does not rotate.

The functions carried out by both the pin and the shoulder are as follows. On the one hand, the shoulder exerts a pressure on the items to be welded. Said pressure, together with the rotation, brings about a heating which brings the metal of which the metal items are constituted to a plastic state at the zone surrounding the pin. Once the metals are in a plastic state, the pin stirs said metals and, by means of its rotating process, draws the material around the tool, in this way producing the weld as the tool progresses and the material cools. During the stirring process, the shoulder provides an additional service, this being preventing the material from being ejected beyond the surroundings of the tool, maintaining the same in accordance with the initial geometry.

The design used nowadays to execute friction welding features a shoulder adapted to carry out flat joints; for this reason it is not possible to insert the same into items which feature a certain angle between the same.

The Japanese patent JP 11320128, on which the preamble of claim 1 is based, describes a configuration for the welding of two perpendicular walls, in which the weld is carried out by means of a shoulder which rests on a wedge, and a pin, both of these rotating solidarily. Said wedge features a through-hole so that the pin may protrude and penetrate the items to be welded.

The drawback of the tool disclosed in this invention lies in that the shoulder features a flat section at each of the parts which rub against the item. This flat section is that which should carry out the forging. Due to the geometry of the same, it would not be possible to carry out the forging of the material to be welded, as the tool would become embedded. For this reason, this geometry would not be suitable for a correct forging of the material. On the other hand, this force is exerted on the shoulder of the tool with a rotating cylinder which is rotating solidarily with the profiled rotor or pin, against the shoulder, with the corresponding unnecessary heat generation on the tool.

The international application No. WO-2007/132252-A1 discloses a friction stir method which comprises causing a rotating probe of a friction stir tool to enter a workpiece or a joint between a pair of workpieces, each workpiece being a low conductivity, high melting point metal or metal alloy. The probe extends from a shoulder, or between shoulders, in contact with the workpieces and rotates relative to each shoulder.

Besides the drawbacks stated above, the insertion of the tool in the bonding zone in case of geometrical errors of the metal items to be bonded presents problems.

### DESCRIPTION OF THE INVENTION

The invention relates to a tool for the friction stir welding of two metal items with an angled joint. The tool of this invention may be used to weld metal items which form any angle, its preferred application being in those cases where the bonding angle is not flat. Typically, the weld will be carried out on two metal items at 90°, although the invention may be used, as has been mentioned above, for any other angle. The tool is comprised of a shoulder and a pin. The pin exits, emerges or surfaces from said shoulder.

In accordance with the invention, the shoulder is formed in the shape of a wedge with two walls, the two walls of said wedge forming an angle which is substantially equal to the angle of the joint of the metal items. In this way, the shoulder may be adjustedly located conveniently between the two metal items, exerting the necessary pressure in order to weld both items and preventing the material from being ejected from the elements to be welded during the stirring process. During the execution of said weld, the shoulder will not rotate. At the meeting point of said walls of the shoulder an interference zone is defined. Contact between the tool and the items to be bonded will take place between the flat faces of the tool and the items, maintaining the condition of the flat faces coinciding with the plates to be bonded between the flat faces adjacent to the interference zone of the tool and on the materials to be bonded during the weld or welding process. The interference zone features a first leading edge and a second trailing edge. The weld shall be carried out by means of a forward movement of the shoulder, it being the leading edge which comes into contact with the two metal items which have not yet been welded; the metal items will be welded once the trailing edge leaves the metal items. During welding, the interference zone will penetrate the metal items until, as has been mentioned above, the walls of the wedge make contact with the items to be bonded. The pin emerges from said interference zone.

The interference zone may be configured in such a way that its entirety may be a protuberance which emerges at the meeting point of the two walls of the wedge. Said protuberance allows the concentration of the pressure at the joint angle of the two metal items, likewise separating the interference zone from the walls of the wedge, in such a way that on carrying out the weld, said walls do not penetrate the metal items to be welded, but merely come into contact with the same.

Said pin may emerge from the middle zone of the interference zone.

The interference zone may feature a greater curvature radius at the ends of said edge, that is to say, at the leading and trailing ends, than at the middle zone, that is to say, the zone from which the pin emerges. The curvature radius at the leading and trailing ends might be, for example, 2 millimetres, while the curvature radius at the middle zone might be, for example, 0.5 millimetres. The evolution of the curvature radius between both ends and the middle zone shall be such that the curvature radius diminishes progressively.

By means of said configuration a series of advantages are achieved. Firstly, the greater radius of the leading and trailing ends aids the insertion of the tool in the event that geometric errors be observed in the items to be welded. Secondly, at the middle zone, with a lesser curvature radius, the penetration of the tool into the material is fomented, it producing a focalised heating at said middle zone, aiding the execution of the weld. It is precisely for this reason that the pin exits or emerges from the middle zone, in order to stir the metal at the heated zone.

The interference zone may be formed in such a way that it consists of a protuberance which protrudes from the walls of the wedge. Said protuberance shall occupy, for example, the first 0.8 millimetres of the walls of the wedge, starting at the interference zone and protruding for example 0.1 millimetres from the walls of the wedge. One of the purposes of the protuberance existing at the interference zone is that said interference zone may penetrate the metal items to be welded without the walls of the shoulder penetrating said items. A possible method of forming this protuberance is to carry out a recess in the walls of the wedge, in such a way that subsequent to the recessing the protuberance described above appears. The walls of the wedge will rest against said metal items, without penetrating the same; therefore the pressure transmitted by the shaft shall be applied only at those places where the pressure is required. The interference zone, and therefore the tool, is designed so as not to penetrate further than this value, in the aforementioned embodiment 0.1 millimetres, in order to bring about the plastic deformation of the material and to produce the ensuing focalised heating in order to aid the execution of the weld. For this reason, the walls of the wedge shall not penetrate the metal items.

The shoulder may be symmetrical with regard to a plane perpendicular to the interference zone, cutting said interference zone at the middle zone of said interference zone. In this way, the leading and trailing ends may be alike and interchangeable; it being possible, in the event of wear at one of the ends, to continue to weld with the other end, thus multiplying the useful life of the tool by two.

### DESCRIPTION OF THE DRAWINGS

To complement the description being carried out and with the aim of aiding a better understanding of the characteristics of the invention, a set of drawings is attached as an integral part of said description, in which the following has been portrayed for illustrative and not limitative purposes:
- Figure 1: shows a perspective view of the tool of this invention welding two metal items.
- Figure 2: shows a perspective view of the tool.
- Figure 3: shows a detailed view of the interference zone.
- Figure 4: shows a detailed view of the leading or trailing end.
- Figure 5: shows a top view of the tool, in which three sections have been made.
- Figures 5A-5C: show the profile of the interference zone at the three sections carried out in Figure 5.
- Figure 6: shows a sectional view of the tool while in the process of welding.
- Figure 6A: shows a view of the pin and the shoulder in a situation prior to welding, where the interference zone has not yet penetrated the metal items to be welded.
- Figure 6B: shows a view of the pin and the shoulder while in the process of welding, where the interference zone has penetrated the metal items to be welded.
- Figure 7: shows a detailed sectional view of the tool of this invention.
- Figure 8: shows a perspective view of a tool designed for welding two metal items with a joint angle greater than 180°.

### PREFERRED EMBODIMENT OF THE INVENTION

A preferred embodiment of the machine tool for the friction stir welding of two metal items (1) with a joint angle of less than 180°, which constitutes the object of this invention, is described below, with reference to the figures.

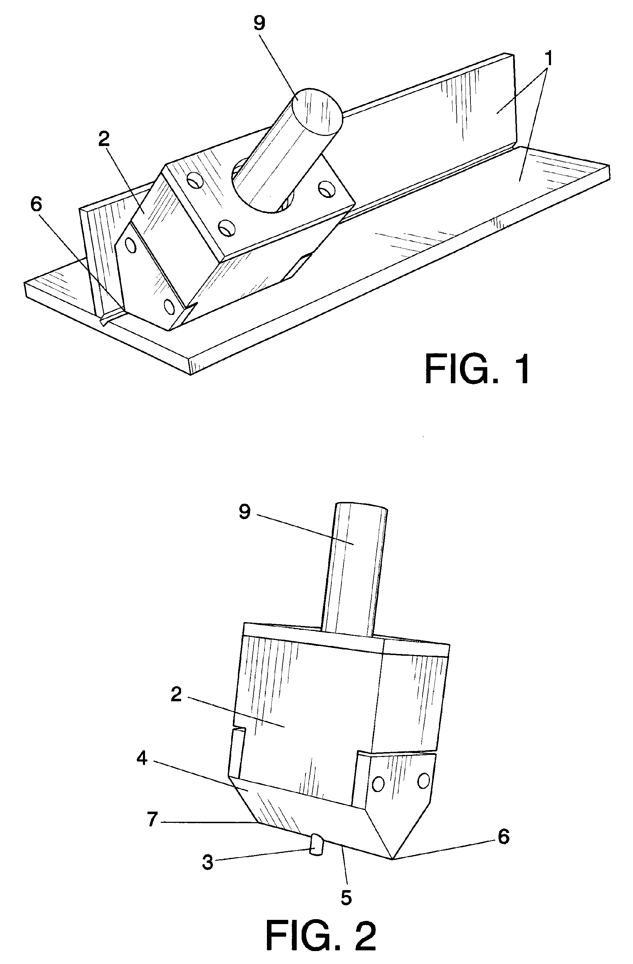

Figure 1 shows the machine tool of this invention carrying out the welding of two metal items (1) at an angle of 90°. The weld is being carried out from right to left, thus observing the leading edge (6) of the tool. As may be seen, the tool is comprised of a shaft (9) and a shoulder (2) comprising a wedge. Said wedge features two walls, which are cut forming an angle equal to the angle formed by the two metal items (1), in this case an angle of 90°. The shaft (9) is responsible for transmitting the rotating movement to the pin (3), and it also transmits in turn the necessary pressure to the shoulder (2).

Figure 2 shows the tool of the invention with greater clarity. In said figure it may be seen how the shoulder (2) is configured in the shape of a wedge. Said wedge shall feature the divergence of its two walls substantially equal to the divergence of the two metal items (1) to be welded, in this case 90°. The two walls have a meeting point at an interference zone (5), from which the pin (3) exits or emerges through its middle zone (10). Said interference zone (5) features a leading end (6) which shall be that which enters the two items to be welded, and a trailing end (7), which shall be that which leaves the metal items (1) once these are welded. In the embodiment described, the shoulder (2) is symmetrical with regard to a plane perpendicular to the interference zone (5) which passes through the middle zone (10) of said interference zone (5); for this reason the two ends (6, 7) shall be identical, and both may carry out the functions of the leading and trailing ends alike. For this reason, in the event that the leading end becomes worn to an extent that it is no longer possible to carry out welding with this end, the tool may be turned and it may be possible to continue to carry out welds with the other end; in this way, the useful life of the tool is doubled.

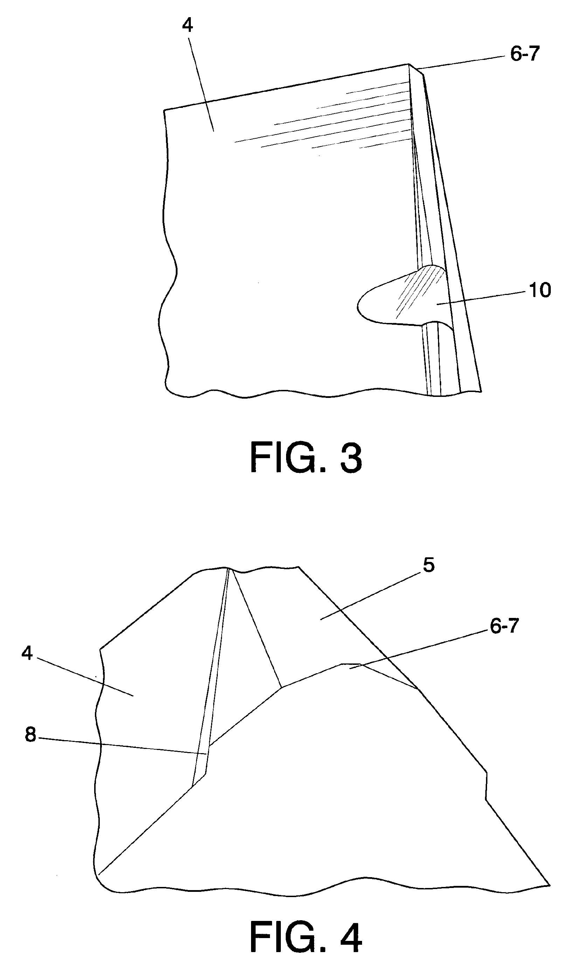

Figure 3 shows a detail of the interference zone (5), in particular from the orifice from which the pin (3) exits to one of the two ends (6, 7) of the interference zone (5), be it the leading end (6) or the trailing end (7); these, as has been mentioned above, are equal. It is seen in said figure how the curvature radius is, according to the present invention, greater at the leading (6) or trailing ends, for example with a value of 2 millimetres radius, while said radius of the interference zone (5) decreases progressively until it reaches the zone which is near to the orifice through which the pin (3) exits, that is to say, the middle zone (10) of the interference zone (5), where it reaches its smallest curvature radius, for example with a value of 0.5 millimetres. These two values are two guiding values while not being limitative, used in this embodiment, but the following values would be equally valid: 1.75 millimetres - 0.45 millimetres, or 1.65 millimetres - 0.40 millimetres, that is to say, any pair of values where the curvature radius of the leading (6) and trailing ends is greater than the curvature radius of the middle zone (10) of the interference zone (5).

The objective sought with this difference in curvatures is that the curvature radius at the leading end (6) should be sufficient to progressively penetrate the item and to compensate or mitigate possible geometric errors in the metal items (1). As the curvature radius decreases, the interference zone (5) is able to penetrate deeper into the weld line. The penetration shall be greatest at that area at which the curvature radius of the interference zone (5) is smallest, that is to say, at the middle zone (10) of said interference zone (5), that is to say, where the pin (3) is located. It will therefore be at this zone, the middle zone (10), where the effective pressure of the shoulder (2) is greatest, and therefore where the heat produced by the friction will be concentrated, the remainder of the areas of the pin (3) remaining free of this effect. Thus, the operation of the machine is more efficient, given that the heat is concentrated only at that zone where it should be produced. This is the place where the pin (3) is located; therefore the work carried out by the same will be enhanced by this concentrated heat.

Figure 4 shows an optimisation of the design of the wedge. Said optimisation consists of the interference zone (5) comprising a protuberance which projects 0.1 millimetres from the walls of the wedge. This protuberance must be such that, when the interference zone (5) penetrates the weld line, the walls of the shoulder (2) do not prevent said penetration. If it is estimated that the penetration of the interference zone (5) is of a value close to but less than 0.1 millimetres, the proposed value of 0.1 millimetres achieves the established purpose. By means of this protuberance, the walls of the shoulder (2) will neither affect nor prevent the penetration of the tool, and in the same way will allow the guiding of said tool, given that they will be close to or in contact with the metal items (1) to be welded. In the case portrayed in the figures, said protuberance has been executed by means of a reduction (8) in the walls of the wedge, this reduction (8) being of 0.1 millimetres.

With the aim of smoothing the possible sharp edges existing on the shoulder (2), for example in zones such as the meeting point between the reduction (8) of the wall (4) of the wedge and the interference zone (5), it has been foreseen that said edges should be rounded with a radius of less than 0.2 millimetres. By means of the roundnesses created by these arcs, a smoothing of the profiles is achieved, and the risk of breakage of the tool is minimised.

In the manufacturing process of the shoulder (2), the progressive radius from the ends of the item to the centre of the tool is executed first. Subsequently, the reductions in the walls of the wedge are executed, these having a depth of 0.1 millimetres, but leaving, at the interference zone (5), a protuberance of 0.8 millimetres. Finally, the rounding of the sharp edges is carried out.

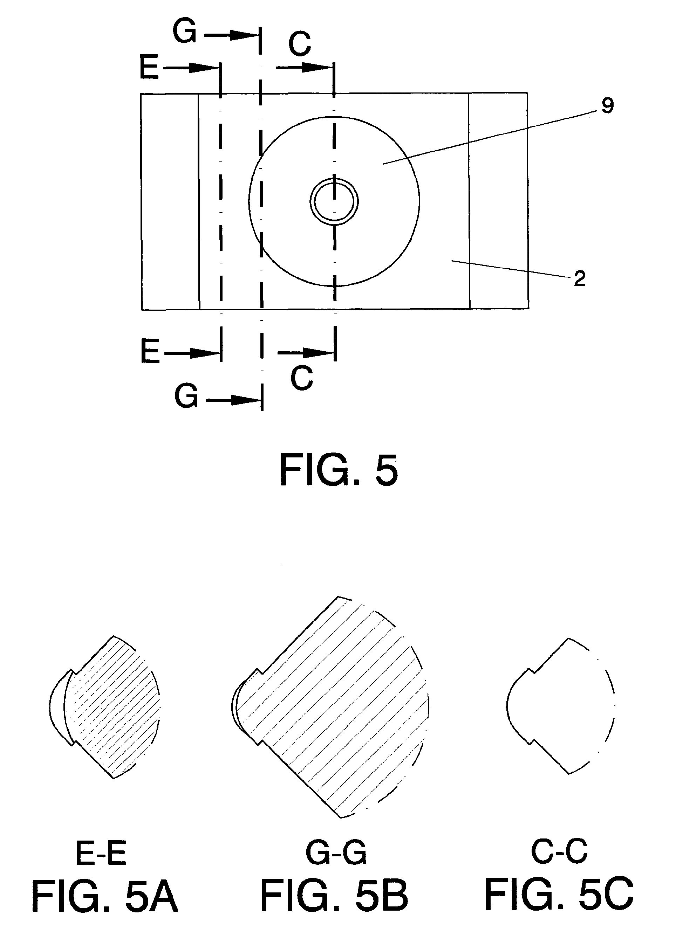

To complement figures 3 and 4, figures 5, 5A, 5B and 5C show an evolution of the interference zone (5) at three different points on the shoulder (2). There appears a smaller radius in all of said figures; this would correspond to the radius at the middle plane of the shoulder (2), that is to say, at the point through which the pin (3) exits or emerges, this plane being depicted in figure 5C. As the plane of this cross-section moves away from this middle plane, figures 5A and 5B, a greater radius appears, which reaches its maximum at the two ends (6, 7) of the tool.

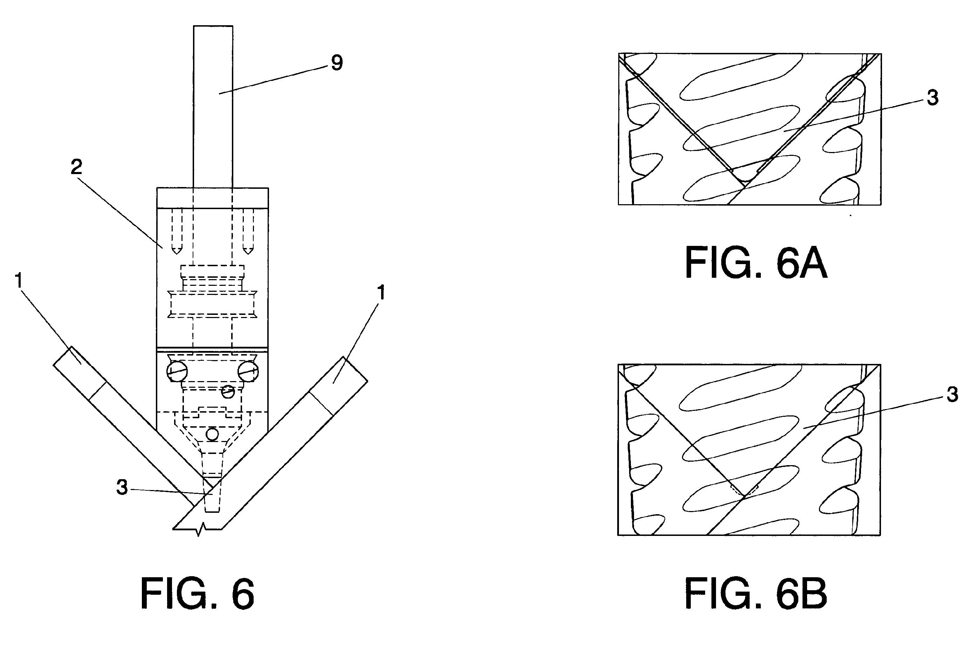

Figure 6 shows a sectional view of the tool, in which the operation of the pin (3) may be observed. As may be seen, the shaft (9) provides simultaneously a rotating movement which allows the pin (3) to penetrate the metal items (1) to be welded, and to progress along the weld line, and it additionally transmits sufficient pressure to the shoulder (2) for it to forge the material of the metal items (1) stirred by the pin to bring them to the necessary state of plasticity for the weld to be carried out. The detailed view in figure 6A shows how the pin (3) has penetrated the two metal items (1); however, it is not yet carrying out the weld, as the interference zone (5) has not yet penetrated the metal items (1) to be welded. In figure 6B it may be observed how the interference zone (5) and the protuberance formed by the same has penetrated the metal items (1) to be welded. This penetration brings about the heating of the joint angle or the weld line of the two metal items (1) to be welded; without this, the weld could not take place (nor could welding be carried out).

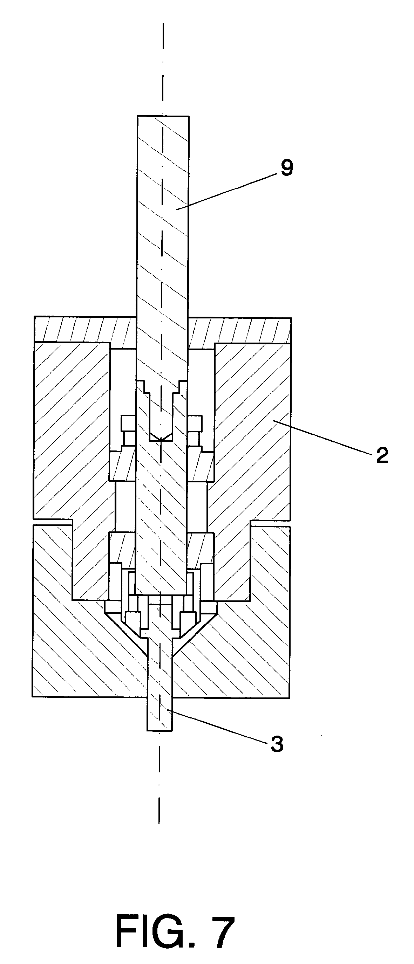

Figure 7 shows a detail of the tool disclosed in which it may be observed how the shaft (9) simultaneously transmits a rotating movement to the pin (3) and pressure to the shoulder (2). The shaft (9) transmits the pressure by means of a washer solidarily joined to the shaft and which buttresses against a bush which is joined to the structure of the shoulder by means of a number of bearings. The pressure from the shaft (9) transmitted to the bush by means of the washer is transmitted to the shoulder (2) and is applied at the interference zone (5). In the same way, the shaft (9) additionally rotates and this rotating movement is transmitted to the pin (3) via a linking means located at the end of the shaft (9). These two movements of the shaft, that of pressure and that of rotation, allow the tool disclosed to carry out the weld.

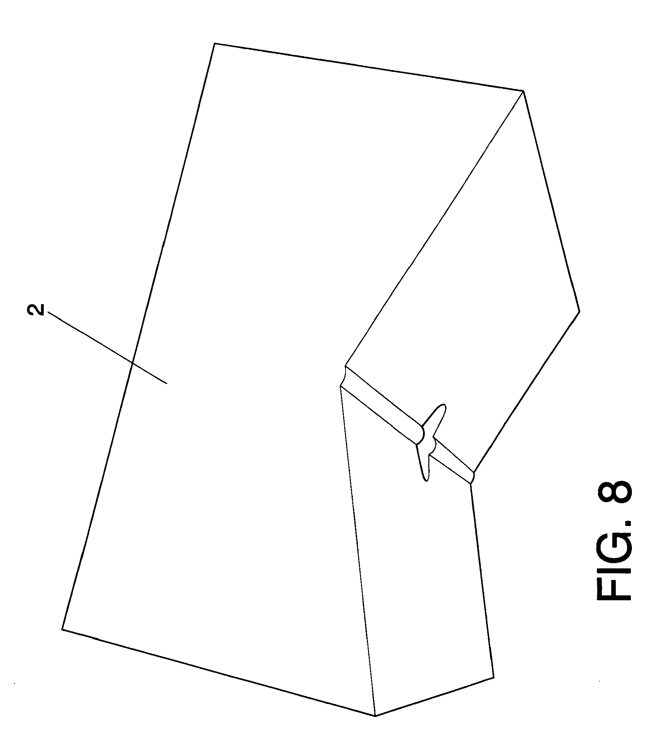

Hitherto, a shoulder (2) with an angle of less than 180°, specifically of 90°, has been discussed. Any other angle of less than 180° would feature a similar appearance to that described in the previous figures. Figure 8 shows the appearance of a shoulder (2) designed for an angle greater than 180°. Said shoulder (2) may be applicable when it is not possible to carry out the weld on the interior face of the metal items (1), or when it may be necessary to weld on both the interior and the exterior of the items. As may be observed, the characteristics of the shoulder (2) remain, and it may be seen that the shoulder (2) forms the same angle as the metal items (1) to be welded, not portrayed; likewise, an interference zone (5) also appears, this being capable of penetrating the bonding angle during welding. In the event that it should be desired to weld two metal items (1) forming a plane, the invention would also be applicable. In this case, the heat obtained previously by means of the rotation of the shoulder (2) would now be produced by the penetration of the interference zone (5) into the weld line.

In view of this description and the set of drawings, a person skilled in the art will be able to understand that the invention has been described in accordance with a preferred embodiment of the same, but that many variations may be introduced into said preferred embodiment without exceeding the object of the invention as claimed herein.

## Claims

1. A tool for the friction stir welding of two metal items (1) with an angled joint, comprised of a shoulder (2) and a pin (3) which exits from said shoulder (2), wherein the shoulder (2) is wedge-shaped, with two walls; the two walls of said wedge forming an angle substantially equal to the angle of the join of the metal items (1); said shoulder (2) comprising an interference zone (5) at the meeting point of said two walls, with a first leading end (6) and a second trailing end (7); said interference zone (5) being configured so as to penetrate the metal items (1) until the walls of the wedge make contact with the items to be bonded (1), the pin (3) emerging from said interference zone (5), **characterised in that** the interference zone (5) comprises a protuberance at the meeting point of the two walls of the wedge, wherein the pin (3) emerges from a middle zone (10) of the interference zone (5) and the interference zone (5) features a greater curvature radius at the leading end (6) and at the trailing end (7) than at the middle zone (10) of the interference zone (5).

2. A tool for friction stir welding, as claimed in claim 1, **characterised in that** the curvature radius of the interference zone (5) diminishes progressively from the leading end (6) and the trailing end (7) to the middle zone (10) of said edge.

3. A tool for friction stir welding, as claimed in any of claims 1-2, **characterised in that** the walls of the wedge, beyond the interference zone (5), feature a reduction (8) in the surface which is in contact with the two metal items (1) during welding.

4. A tool for friction stir welding, as claimed in any of claims 1-3, **characterised in that** the shoulder (2) is symmetrical with regard to a plane which is perpendicular to the interference zone (5) and which cuts said interference zone (5) at the middle zone (10) of said interference zone (5).

5. A tool for friction stir welding, as claimed in any of claims 1-4, **characterised in that** the curvature radius of the interference zone (5) at the first leading end (6) and at the second trailing end (7) is less than 2 millimetres.

6. A tool for friction stir welding, as claimed in any of claims 1-5, **characterised in that** the curvature radius of the interference zone (5) at the middle zone (10) is less than 0.5 millimetres.

7. A tool for friction stir welding, as claimed in claim 3, **characterised in that** the reduction (8) in the walls of the wedge is less than 0.1 millimetres.

8. A tool for friction stir welding, as claimed in claim 1, **characterised in that** the protuberance occupies the first 0.8 millimetres of the wedge starting from the interference zone (5).

9. A machine tool comprising a tool as claimed in claims 1-7.

## Patentansprüche

1. Werkzeug zum Rührreibschweißen von zwei Metallgegenständen (1) mit einer Winkelverbindung, die aus einem Schaft (2) und einem Bolzen (3) besteht, der aus dem Schaft (2) austritt, wobei der Schaft (2) die Form eines Keils mit zwei Wänden hat und die zwei Wände des Keils einen Winkel bilden, der im Wesentlichen dem Winkel der Verbindung der Metallgegenstände (1) gleich ist, der Schaft (2) eine Überlagerungszone (5) am Punkt des Zusammentreffens der zwei Wände mit einem ersten, vorderen Ende (6) und einem zweiten, hinteren Ende (7) umfasst, die Überlagerungszone (5) so eingerichtet ist, dass sie in die Metallgegenstände (1) eindringt, bis die Wände des Keils mit den zu verbindenden Gegenständen (1) in Kontakt kommen, und der Bolzen (3) aus der Überlagerungszone (5) austritt,
**dadurch gekennzeichnet, dass**
die Überlagerungszone (5) einen Höcker an dem Punkt des Zusammentreffens der zwei Wände des Keils umfasst, der Bolzen (3) über eine mittlere Zone (10) der Überlagerungszone (5) austritt und die Überlagerungszone (5) an dem vorderen Ende (6) sowie an dem hinteren Ende (7) einen größeren Krümmungsradius hat als an der mittleren Zone (10) der Überlagerungszone (5).

2. Werkzeug zum Rührreibschweißen nach Anspruch 1,
**dadurch gekennzeichnet, dass**
der Krümmungsradius der Überlagerungszone (5) von dem vorderen Ende (6) und dem hinteren Ende (7) aus zu der mittleren Zone (10) der Kante hin fortschreitend kleiner wird.

3. Werkzeug zum Rührreibschweißen nach einem der Ansprüche 1-2,
**dadurch gekennzeichnet, dass**
die Wände des Keils jenseits der Überlagerungszone (5) eine Ausnehmung (8) in der Fläche aufweisen, die beim Schweißen mit den zwei Metallgegenständen (1) in Kontakt ist.

4. Werkzeug zum Rührreibschweißen nach einem der Ansprüche 1-3,
**dadurch gekennzeichnet, dass**
der Schaft (2) in Bezug auf eine Ebene symmetrisch ist, die senkrecht zu der Überlagerungszone (5) ist und die die Überlagerungszone (5) in der mittleren Zone (10) der Überlagerungszone (5) schneidet.

5. Werkzeug zum Rührreibschweißen nach einem der Ansprüche 1-4,
**dadurch gekennzeichnet, dass**
der Krümmungsradius der Überlagerungszone (5) an dem ersten, vorderen Ende (6) und an dem zweiten, hinteren Ende (7) weniger als 2 Millimeter beträgt.

6. Werkzeug zum Rührreibschweißen nach einem der Ansprüche 1-5,
**dadurch gekennzeichnet, dass**
der Krümmungsradius der Überlagerungszone (5) an der mittleren Zone (10) weniger als 0,5 Millimeter beträgt.

7. Werkzeug zum Rührreibschweißen nach Anspruch 3,
**dadurch gekennzeichnet, dass**
die Abmessung der Ausnehmung (8) in den Wänden des Keils weniger als 0,1 Millimeter beträgt.

8. Werkzeug zum Rührreibschweißen nach Anspruch 1,
**dadurch gekennzeichnet, dass**
der Höcker die ersten 0,8 Millimeter des Keils von der Überlagerungszone (5) ausgehend einnimmt.

9. Werkzeugmaschine, die ein Werkzeug nach den Ansprüchen 1-7 umfasst.

## Revendications

1. Outil destiné au soudage par friction malaxage de deux pièces métalliques (1) avec une articulation coudée, constitué d'un épaulement (2) et d'une broche (3) qui dépasse de l'épaulement (2) dans lequel l'épaulement (2) à la forme d'un coin comprenant deux parois, les deux parois du coin formant un angle essentiellement égal à l'angle d'articulation des pièces métalliques (1), cet épaulement (2) comprenant une zone d'interférence (5) au point d'intersection des deux parois, avec une première extrémité d'attaque (6) et une seconde extrémité de fuite (7), cette zone d'interférence (5) étant conformée de façon à pénétrer dans les pièces métalliques (1) jusqu'à ce que les parois du coin viennent en contact avec les pièces (1) à relier, la broche (3) dépassant de cette zone d'interférence (5),
**caractérisé en ce que**
la zone d'interférence (5) comporte une protubérance au point d'intersection des deux parois du coin, la broche (3) dépassant de la zone centrale (10) de la zone d'interférence (5) et la zone d'interférence (5) ayant un plus grand rayon de courbure au niveau de l'extrémité d'attaque (6) et de l'extrémité de fuite (7) que dans la zone centrale (10) de la zone d'interférence (5).

2. Outil de soudage par friction malaxage conforme à la revendication 1,
**caractérisé en ce que**
le rayon de courbure de la zone d'interférence (5) diminue progressivement de l'extrémité d'attaque (6) et de l'extrémité de fuite (7) vers la zone centrale (10) du coin.

3. Outil de soudage par friction malaxage conforme à l'une quelconque des revendications 1 et 2,
**caractérisé en ce que**
les parois du coin présentent au-delà de la zone d'interférence (5) un retrait (8) dans la surface qui est en contact avec les deux pièces métalliques (1) au cours du soudage.

4. Outil de soudage par friction malaxage conforme à l'une quelconque des revendications 1 à 3,
**caractérisé en ce que**
l'épaulement (2) est symétrique par rapport à un plan perpendiculaire à la zone d'interférence (5) et qui coupe cette zone d'interférence dans la zone centrale (10) de celle-ci.

5. Outil de soudage par friction malaxage conforme à l'une quelconque des revendications 1 à 4,
**caractérisé en ce que**
le rayon de courbure de la zone d'interférence (5) au niveau de la première extrémité d'attaque (6) et de la seconde extrémité de fuite (7) est inférieur à 2 mm.

6. Outil de soudage par friction malaxage conforme à l'une quelconque des revendications 1 à 5,
**caractérisé en ce que**
le rayon de courbure de la zone d'interférence (5) au niveau de la zone centrale (10) est inférieur à 0,5 mm.

7. Outil de soudage par friction malaxage conforme à la revendication 3,
**caractérisé en ce que**
le retrait (8) dans les parois du coin est inférieur à 0,1 mm.

8. Outil de soudage par friction malaxage conforme à la revendication 1,
**caractérisé en ce que**
la protubérance occupe les premiers 0,8 mm du coin en partant de la zone d'interférence (5).

9. Machine-outil équipée d'un outil conforme aux revendications 1 à 7.
